# EUROPEAN PATENT SPECIFICATION

(11) **EP 2 233 391 B1**
(45) Date of publication and mention of the grant of the patent: **16.05.2012**
(21) Application number: 10157782.3
(22) Date of filing: 25.03.2010
(51) Int. Cl.: B63B 17/04, E04F 11/18

(54) **Railing element and method for the making thereof**
Relingelement und Verfahren zur Herstellung
Element du garde-fou et procédé pour cette fabrication

(30) Priority: 25.03.2009 NL 2002667
(43) Date of publication of application: 29.09.2010
(73) Proprietor: Bolidt Maatschappij tot Exploitatie van Kunststoffen en Bouwwerken B.V., 3341 LJ Hendrik-Ido-Ambacht (NL)
(72) Inventor: Bol, Rientz Willem, 3342 LB Hendrik-Ido-Ambacht (NL)
(74) Representative: Louwaard, Jan-Willem Paul

(56) References cited:
- WO-A-2005/028776
- CN-Y- 200 974 325
- US-A1- 2005 133 777
- US-A1- 2007 022 938
- US-A1- 2007 029 536
- US-A1- 2008 265 232

## Description

The present invention relates to a railing element and to a method for the manufacture thereof.

Railing elements are for instance arranged along gangways on cruise ships to give passengers and crew members something to hold onto in the case of unexpected and/or excessive movement of the cruise ship. It is thus possible to avoid passengers or crew members falling on deck or, even worse, overboard.

Document US2005/0133777 discloses the preamble of independent claim 1.

Railing elements on cruise ships are traditionally manufactured from teak.

The drawback of the known reading elements is that the costs of use thereof are high.

The invention has for its object to obviate this drawback.

In order to realize this object the present invention provides a railing element according to claim 1, a manufacturing method according to claim 12, and a cruise ship according to claim 24.

Teak is traditionally applied in the ship-building industry owing to its good resistance to wood rot. The surface of untreated teak does however acquire a dull and tarnished appearance under the influence of the salty environment and under the influence of sunlight. In order to prevent a dull and discoloured appearance of the railing elements, and moreover avoid differences in appearance between successive railing elements, teak railing elements on cruise ships are generally provided with a lacquer layer.

It has been found that the passengers of cruise ships have come to appreciate the stylish appearance of these lacquered teak railing elements which is associated in their perception with a cruise ship. The crew of the cruise ships therefore ensures that the railing elements are provided with a neat lacquer layer. The railing elements must here be sanded and re-lacquered regularly because the lacquer layer adheres poorly to the naturally oily teak. This maintenance must not only be carried out regularly but also in the shortest possible time, so that passengers are inconvenienced as little as possible by maintenance operations.

The measures according to the invention for instance make it possible, by means of the decoration at the surface of the profile body, for a railing element according to the invention to have the appearance of a lacquered teak railing element and for the profile body to be made from a plastic composite which has better lacquer-retaining properties than teak. The measures then have the advantage that the railing element has the same appearance to the passengers as a teak railing element, while the maintenance costs of sanding and lacquering which result from the lacquer detaching from the teak railing elements are avoided. Further, according to the invention the decoration is an ink pattern. This measure makes a detailed decoration possible, such as a realistic representation of a wood pattern. Other patterns can also be reproduced in great detail, whereby a railing element according to the invention can have a stylish appearance to the passengers. This has the advantage that for the passengers of a cruise ship the railing element according to the invention is a wholly satisfactory substitute for a teak railing element..

In a favourable embodiment of the railing element according to the invention the plastic composite is a fibre-reinforced plastic composite. This measure makes it possible that a railing element according to the invention is stronger than a teak railing element. Teak railing elements are generally arranged on a steel railing element in order to thus save on teak and still realize a sufficiently strong railing. The measure that the plastic is fibre-reinforced makes it possible for the railing element to be so strong that the steel railing element can be dispensed with. This then has the advantage that the weight and the cost of the steel railing elements, including maintenance costs, are reduced.

In a further embodiment of the railing element according to the invention the surface of the profile body comprises the ink pattern. In an alternative embodiment hereof a layer arranged in the profile body comprises the ink pattern. The measures of both embodiments make it possible to avoid the ink pattern wearing off the surface of the profile body. This has the advantage that the maintenance costs of the railing element according to the invention can be reduced.

Alternatively, a layer arranged on the surface of the profile body comprises the ink pattern. This measure makes it possible for any irregularities in the surface of the profile body to be concealed. Particularly in the case of a profile body where the plastic composite is a fibre-reinforced plastic composite fibres can be visible as irregularities at the surface of the profile body. This measure has the advantage that the appearance of the railing element according to the invention is better. In a further embodiment hereof the layer comprising the ink pattern is a lacquer layer.

In a further embodiment of the railing element according to the invention a protective lacquer layer is applied over the decoration. This measure makes it possible for the decoration to be protected from influences in the environment in which a cruise ship is located. The decoration can for instance thus be protected from the influence of UV light by means of a protective lacquer. This has the advantage that the railing element according to the invention has a longer lifespan.

In a further embodiment of the railing element according to the invention the profile body is hollow. This measure makes it possible for the railing element according to the invention to have a maximum bending stiffness with a minimum amount of plastic material. This has the advantage that the weight and cost of a railing element according to the invention are minimal. This measure moreover assists in making it possible to dispense with the steel railing elements generally used in combination with teak railing elements on cruise ships. This measure also makes it possible for the cavity in the profile body to be used to increase the functionality of a railing element according to the invention relative to the functionality of a teak railing element.

A favourable embodiment of the railing element according to the invention with a hollow profile body comprises lighting elements at the surface thereof which are operatively connected to lighting power supply means in the cavity of the profile body. This measure makes it possible to illuminate the area in the vicinity of the railing elements so that this area in the vicinity of the railing elements is readily visible in the dark. This improves both the safety and the appearance of the cruise ship in the dark. Because the lighting power supply means, such as electrical and optical conduits, are received in the cavity of the profile body, the lighting elements can be powered in simple manner without additional channels arranged outside the railing element.

A further embodiment of the railing element according to the invention with a hollow profile body comprises sprinkler elements at the surface thereof which are operatively connected to sprinkler feed means in the cavity of the profile body. This measure makes it possible to spray the area in the vicinity of the railing element. This measure has the advantage that for instance salt deposits on surfaces in the vicinity of the railing element can be flushed clean in simple manner. On known cruise ships this flushing is carried out by crew members who, in order to clean surfaces located outside the railing element, must venture outside the safe zone defined by the railing element. This measure therefore also contributes toward the safety of crew members. Because the sprinkler feed means, such as a water conduit, are received in the cavity of the profile body, the sprinkler elements can be fed in simple manner without additional channels arranged outside the railing element.

A further embodiment of the railing element according to the invention comprises a body which has bending stiffness and which extends along the profile body. If necessary, this measure enables an additional strengthening of the railing element.

The invention also relates to a method for manufacturing a railing element, comprising the steps of forming a profile body from a plastic composite and arranging a decoration at a surface of the profile body. This method makes it possible to manufacture a railing element as described above at a desired location using widely available raw materials. Teak is a slow-growing natural product which can only be cultivated in a few places in the world, whereby the costs of cultivation of teak and transport costs are considerable. In addition, the forming of a railing element from teak is a labourious and therefore expensive process. Raw materials for a plastic composite as applied in the method are widely available and can be readily formed into a profile body. In addition, the forming of the profile body and the decorating of the surface thereof can take place in many places in the world. The method according to the invention hereby has the advantage that the high cultivation costs, transport costs and manufacturing costs of a teak railing element can be avoided.

In a favourable embodiment of the method according to the invention the plastic composite is a fibre-reinforced plastic composite. This measure makes it possible to manufacture a railing element with great strength in simple manner.

In a favourable embodiment of the invention the arranging of a decoration is applying ink in a pattern. This measure makes it possible to manufacture a railing element with a very detailed decoration.

In a further embodiment of the method according to the invention this comprises the step of applying a protective lacquer layer to the decorated surface. This measure makes it possible to protect the decoration from outside influences.

In a favourable embodiment of the method according to the invention, applying ink in a pattern to a surface of the profile body to be decorated comprises the steps of providing a carrier with the ink pattern thereon, placing the carrier with the ink pattern close to a surface to be decorated, transferring the ink pattern from the carrier to the surface to be decorated by means of sublimating the ink under the influence of heat. This measure makes it possible for the ink to be absorbed into the surface for decorating so that a decoration results which is exceptionally wear-resistant. In a favourable embodiment hereof the surface of the profile body comprises the surface to be decorated. This embodiment makes it possible to prevent the ink pattern wearing off the surface of the profile body. Alternatively, the embodiment of the method wherein an ink pattern is transferred from a carrier to the surface to be decorated by means of sublimating the ink under the influence of heat comprises the step of applying to the surface of the profile body a decoration-carrying lacquer layer as the surface to be decorated. This measure makes it possible to conceal unevenness at the surface of the profile body. When a fibre-reinforced plastic composite is applied to form the profile body and an ink pattern is applied as decoration, it may occur that the ink cannot soak into fibres present at the surface of the profile body. This measure makes it possible to cover the fibres with a lacquer layer so that a surface for decorating results into which the ink can be absorbed uniformly. In a further embodiment hereof the method also comprises the step of roughening the surface of the profile body prior to the step of applying the decoration-carrying lacquer layer thereto. This measure makes it possible for the decoration-carrying lacquer layer to adhere better to the surface of the profile body.

In a further embodiment hereof the method also comprises the step of roughening the surface to be decorated prior to the step of arranging a decoration at a surface of the profile body to be decorated. This measure makes it possible for instance that the decorated surface is more suitable for having lacquer layers applied thereto after the ink pattern has been arranged. This has the advantage that no operations damaging the ink pattern are necessary once the ink pattern has been arranged.

In a further embodiment of the method according to the invention the step of forming a profile body from a plastic composite comprises the step of extruding a profile body from a plastic composite. This measure enables a simple and cost-effective forming of the profile body. In a further embodiment hereof the method also comprises the steps of providing a body having bending stiffness, and arranging the profile body on the body having bending stiffness. This measure makes it possible to manufacture a curved profile body having bending stiffness. This has the advantage that curved railing elements having bending stiffness can also be manufactured.

In a further embodiment of the method according to the invention the step of forming a profile body from a plastic composite comprises the step of arranging a decoration at a surface of the profile body. The arranging of the decoration during forming of the profile body enables a particularly good absorption of the decoration at the surface of the profile body, so avoiding the decoration wearing off or detaching from the profile body. This embodiment also enables a shorter throughput time in the manufacture of a railing element according to the invention. In a favourable embodiment hereof the step of forming a profile body from a plastic composite comprises the step of forming a core of the profile body, and the step of arranging a decoration at a surface of the profile body comprises the step of arranging a layer of material carrying the decoration around the core of the profile body. This embodiment enables simple arrangement of a decoration at a surface of the profile body during forming of the profile body. In a further favourable embodiment the step of forming a core of the profile body comprises of forming a bundle of elongate fibres saturated in the plastic composite as the core of the profile body in a pulltrusion process, and the step of arranging a layer of material carrying the decoration around the core of the profile body comprises of arranging, as the layer of material carrying the decoration, a fibre cloth carrying the decoration around the bundle of elongate fibres saturated in the plastic composite in the pulltrusion process. This embodiment makes a continuous manufacturing process possible.

The profile body could also be embodied in a form other than that of a railing element, so that the above described method can also be applied for the manufacture of products other than a railing element.

The present invention will be further elucidated hereinbelow on the basis of exemplary embodiments, which are shown in the accompanying drawing. These are non-limitative exemplary embodiments. The same or similar parts, components and elements are designated in the figures with the same reference numerals. In the drawing:
- fig. 1-5 show schematically in steps an embodiment of the method according to the invention;
- fig. 6 shows a perspective view of an embodiment of a railing element according to the invention in assembled state on a cruise ship;
- fig. 7 shows a cross-sectional view of the railing element of figure 6;
- fig. 8-10 show an alternative embodiment of the step of figure 1;
- fig. 11-15 show alternative methods of realizing a bend with railing elements according to the invention;
- fig. 16 shows a possible method of closing the cavity of an embodiment of a railing element according to the invention with a hollow profile body;
- fig. 17-19 show schematically in steps an alternative embodiment of the method according to the invention.

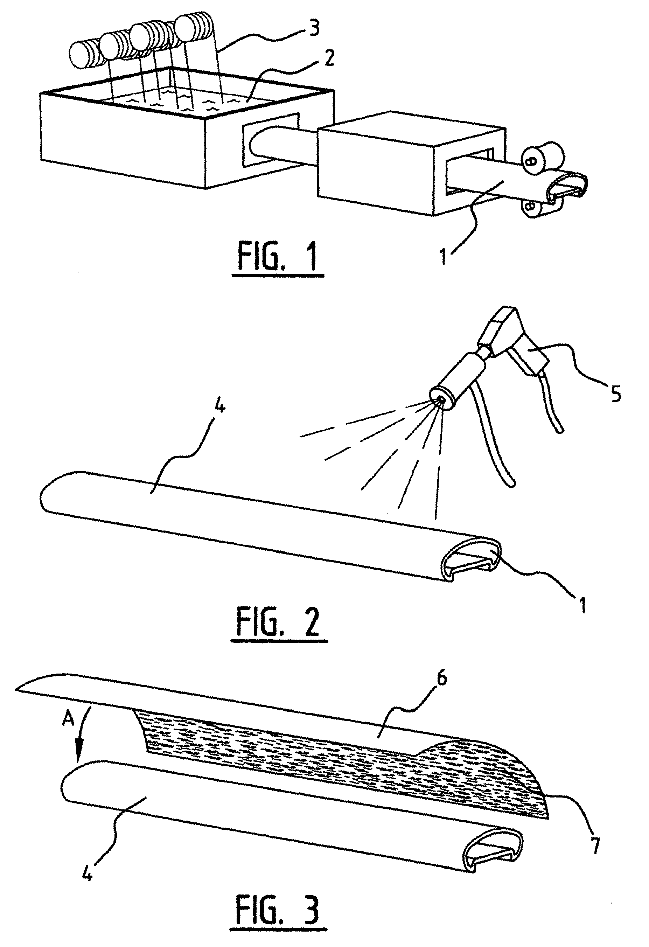

Figure 1 shows schematically the step of forming a profile body 1 from a plastic composite. Shown is that a profile body 1 is formed by means of an extrusion process, in particular a pulltrusion process. The formed profile body is hollow. Shown is that profile body 1 is formed from a plastic composite 2 to which fibres 3, for instance glass fibres, are added. Profile body 1 is then substantially of fibre-reinforced plastic composite, wherein the fibres extend in the longitudinal direction of the profile body. It is also possible for the profile body to be formed in other manner from a plastic composite, for instance by means of a moulding process. It is also possible for the fibres to be arranged for instance in the peripheral direction of the profile body and/or to be arranged in mats. A fibre-reinforced plastic composite is for instance glass fibre-reinforced polyester. The plastic composite can be coloured for the purpose of supporting the decoration to be arranged. After the step of forming profile body 1 the step as shown in figure 2 is performed.

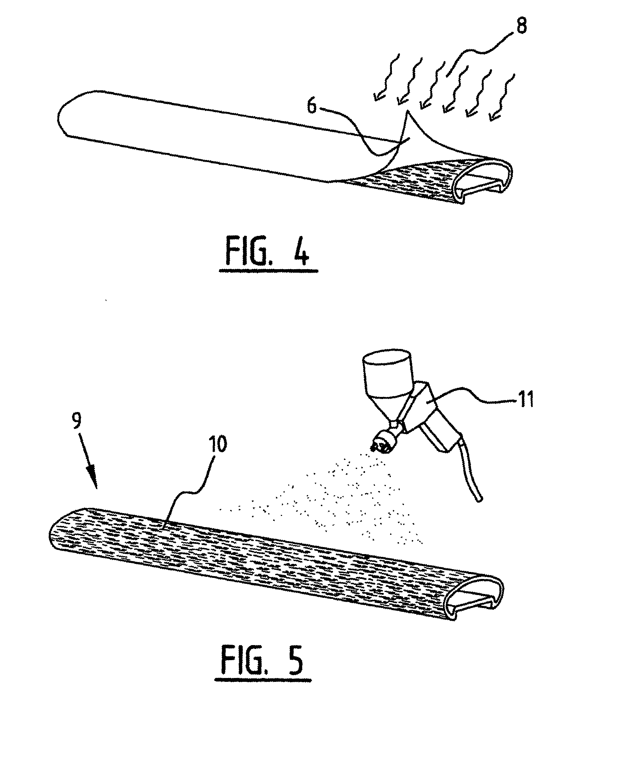

Figure 2 shows schematically the step of roughening the surface 4 to be decorated. Shown is that surface 4 to be decorated is roughened by means of a sandblasting process, represented schematically by means of a blasting gun 5. Roughening could also be carried out in other manner, for instance by means of a sanding process. Surface 4 to be decorated can be the surface of profile body 1, but can also be a decoration-carrying lacquer layer applied to the surface of profile body 1. In the latter case the surface of profile body 1 can be roughened prior to the decoration-carrying lacquer layer being applied. The decoration-carrying lacquer layer is for instance a polyurethane (PU) lacquer layer. After the step of roughening the surface 4 to be decorated, a decoration is arranged at the surface to be decorated by means of the steps as shown in figures 3 and 4.

Figure 3 shows schematically that a carrier 6 having thereon a decoration in the form of an ink pattern 7 is placed close to surface 4 to be decorated in the direction of arrow A. In the shown exemplary embodiment the ink pattern is a grain pattern. The ink pattern can however also be different. As shown schematically in figure 4, after this step the ink pattern is transferred from the carrier to the surface to be decorated by means of sublimating the ink under the influence of heat 8. This step takes place for instance in an oven at 180 degrees Celsius. In this step the ink of the ink pattern is absorbed into the surface to be decorated. After removal of carrier 6 a railing element 9 as shown in figure 5 then results, with a profile body substantially of a plastic composite and a decoration at the surface of the profile body. Arranging a grain pattern as decoration gives the railing element 9 the appearance of a teak railing element. Figure 5 also shows the step of applying a protective lacquer layer to decorated surface 10 by means of a spraying process, represented schematically by means of a lacquer gun 11. This protective lacquer layer adheres to decorated surface 10 better owing to the roughening step, as shown in figure 2, prior to the decoration being arranged. The protective lacquer layer serves for instance as UV filter for protecting the ink pattern from UV light.

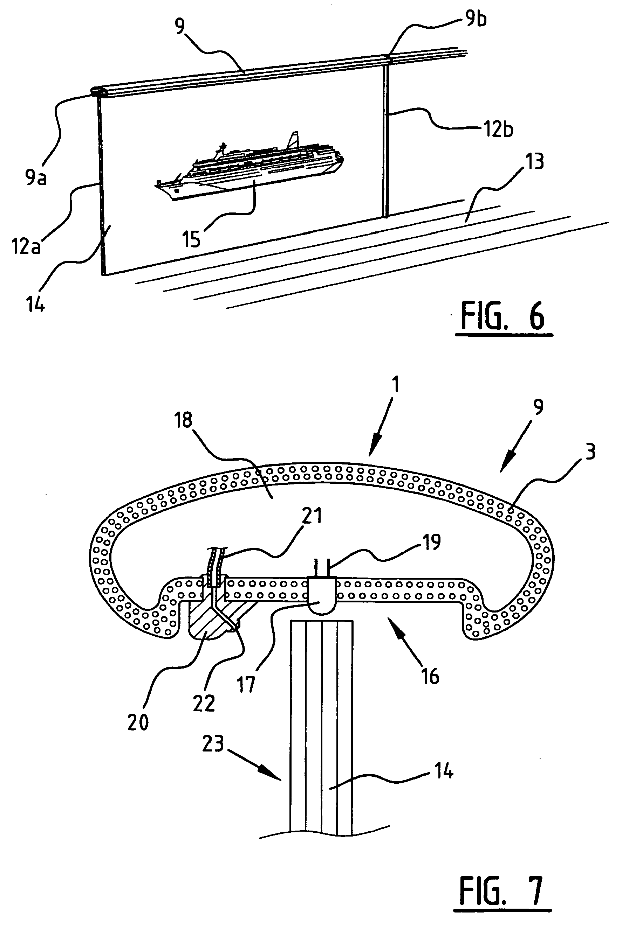

Figure 6 shows railing element 9 of figure 5 while it is mounted on a cruise ship. Railing element 9 is mounted at both ends 9a, 9b thereof on uprights 12a, 12b which support railing element 9. Uprights 12a, 12b are arranged on deck 13 of the cruise ship. Because railing element 9 has a hollow fibre-reinforced plastic profile body with bending stiffness, no supporting railing element with bending stiffness of for instance steel is arranged between uprights 12a and 12b. A plate 14 of for instance safety glass is arranged between uprights 12a and 12b. This plate 14 prevents passengers and crew sliding overboard under railing element 9. A logo 15 of the cruise ship is arranged in plate 14, for instance by means of a blasting process.

Figure 7 shows a cross-section of railing element 9 of figure 6. Shown is that railing element 9 has a hollow profile body 1 of a fibre-reinforced plastic composite, wherein fibres 3 extend in the longitudinal direction of railing element 9. A lighting element in the form of a LED lamp 17 is arranged in surface 16 of railing element 9. LED lamp 17 is powered from cavity 18 of profile body 1 by means of an electricity cable 19 (only partially shown) arranged in cavity 18. The area in the vicinity of railing element 9, including the plate 14 of safety glass, can be illuminated with the LED lamp. It is hereby possible to realize illumination of logo 15 arranged in plate 14 as shown in figure 6. Also shown is that a sprinkler element 20 is arranged in surface 16 of railing element 9. This sprinkler element 20 is fed from cavity 18 of profile body 1 by means of a water conduit 21 (only partially shown) arranged in cavity 18. In the shown exemplary embodiment sprinkler channel 22 of sprinkler element 21 is directed toward plate 14 so that surface 23 of plate 14 can be flushed clean by spraying water from the water conduit onto surface 23 through sprinkler channel 22.

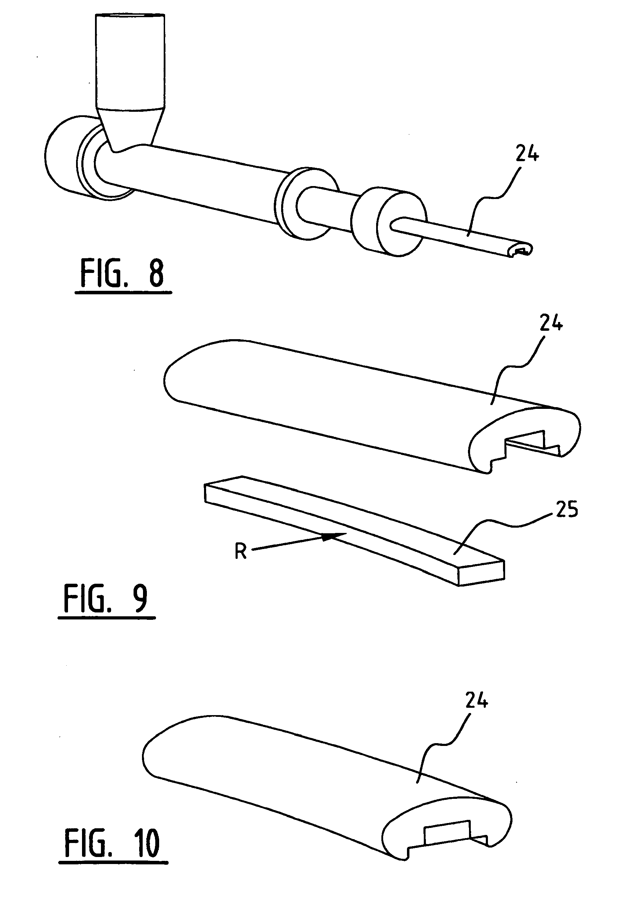

Figures 8-10 show schematically how a railing element with a curve can be realized. Such a curved railing element is for instance used on rear decks of a cruise ship.

Figure 8 shows that a profile body 24 is formed from a plastic composite by means of an extrusion process. By opting for a plastic composite which remains flexible and not incorporating any fibres in the plastic composite this first step results in a profile body 24 which, after extrusion thereof, can be made to curve by being arranged on an already curved, for instance steel body 25 with bending stiffness and radius R. A suitable plastic composite is for instance a polyurethane plastic composite. The step of arranging profile body 24 on the body 25 with bending stiffness is shown in figures 9 and 10. A decoration can then be arranged at the surface of the curved profile body 24 so that a curved railing element is realized. If the chosen flexible plastic composite becomes soft when heated and the decoration is arranged by means of a sublimation process as described in the description of figures 3 and 4, roughening of the surface to be decorated as described in the description of figure 2 can in some cases be dispensed with. In a thus formed railing element the body with bending stiffness imparts bending stiffness to the profile body.

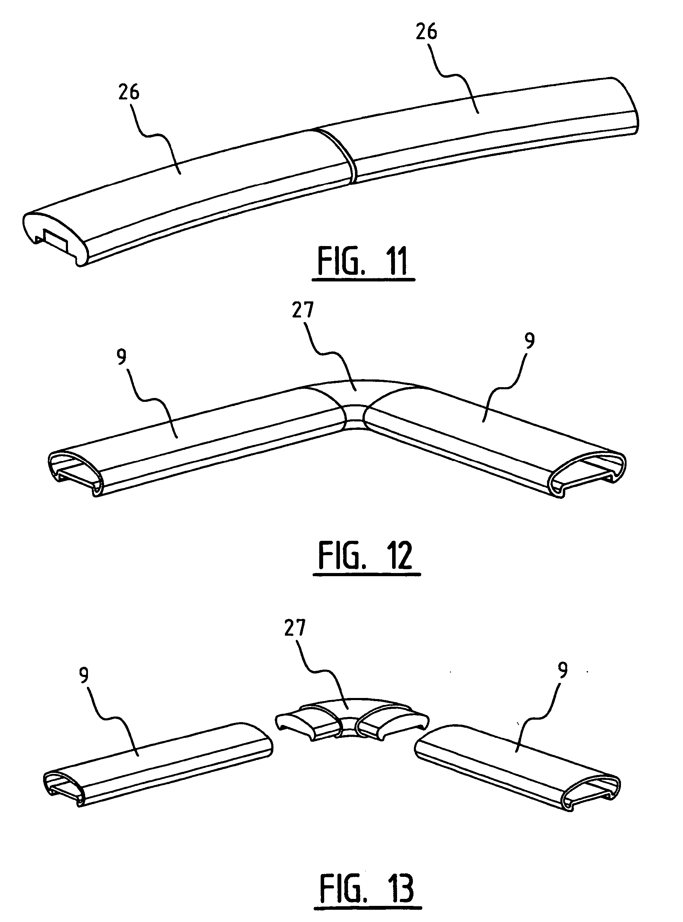

Figure 11 shows a method of forming a gentle curve using two successively arranged curved railing elements 26.

Figure 12 shows a method of forming an angle using two hollow railing elements 9 and a solid railing element 27. As shown in figure 13, the solid railing element 27 has a profile at its ends which fits into the cavity of the hollow railing elements. The solid railing element 27 can be realized by forming a profile body in a mould from a plastic composite and arranging a decoration at the surface of this profile body.

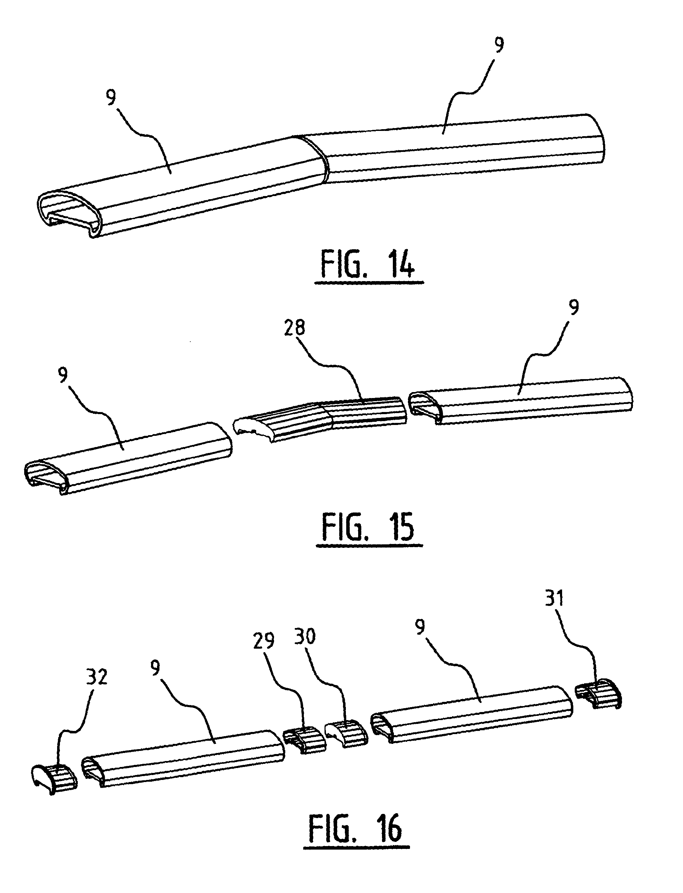

Figures 14 and 15 show a method of forming an angle with two hollow railing elements 9 and a solid coupling element 28 which fits into the cavity of hollow railing elements 9.

Figure 16 shows two hollow railing elements 9 with different closing elements 29, 30, 31, 32, which can be arranged in the cavity of railing elements 9 for closing thereof.

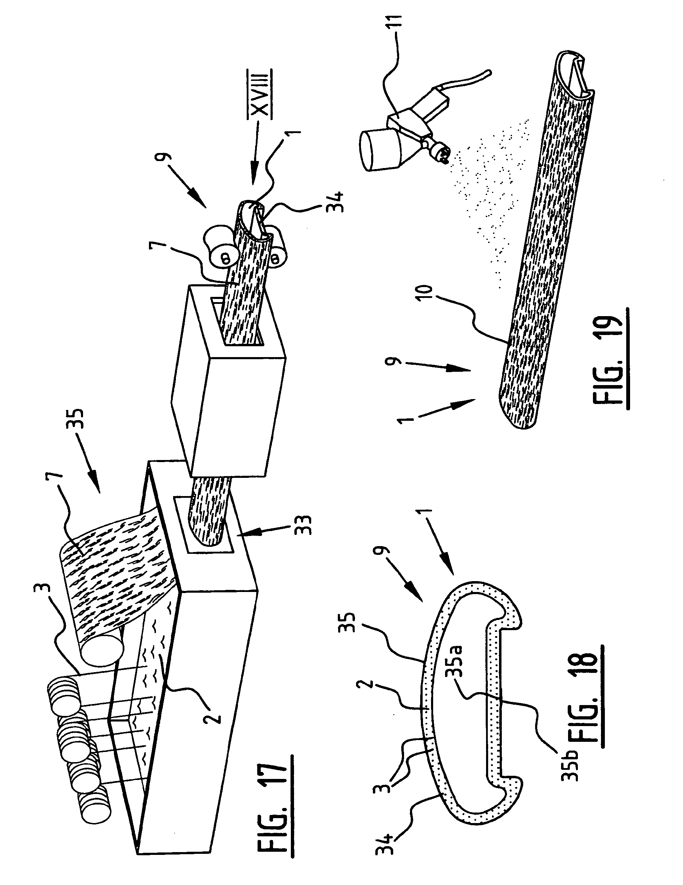

Figures 17-19 show an alternative for the manufacture of a railing element according to the invention as shown in figures 1-5.

Figure 17 shows schematically the step of forming a profile body 1 from a plastic composite. Shown is that a profile body 1 is formed by means of a pulltrusion process. The formed profile body 1 is hollow. Shown is that a number of elongate fibres 3 are saturated in a plastic composite 2, for instance vinyl ester. These fibres are then formed into a bundle around a mandrel (not shown) in pulltrusion mould 33, this bundle forming, together with plastic composite 2 in which fibres 3 are saturated, the core 34 of profile body 1. It is also possible for the fibres to be saturated in the plastic composite at the position of the mandrel, the plastic composite then for instance being carried to the fibres from inside the mandrel via injection channels.

Also shown is that during forming of profile body 1 a decoration in the form of an ink pattern 7 is arranged at the surface of profile body 1. A fibre cloth 35, in particular a glass fibre cloth, which carries ink pattern 7 is arranged for this purpose around the bundle of elongate fibres 3 saturated in the plastic composite in pulltrusion mould 33. Fibre cloth 35 here also becomes saturated with the plastic composite so that the fibre cloth with ink pattern 7 becomes part of profile body 1. A railing element 9 thus results which comprises a profile body 1 having at the surface thereof a decoration in the form of an ink pattern, wherein a layer arranged in the profile body comprises the ink pattern. The elongate fibres extend in the longitudinal direction of profile body 1. It is also possible for fibres 3 to extend for instance in the peripheral direction of the profile body. Plastic composite 2 can be coloured for the purpose of enhancing the decoration to be arranged.

Figure 18 shows a cross-section of railing element 9 resulting from the method as shown in figure 18. Shown is that core 34 of profile element 1 is formed by elongate fibres 3 extending in the longitudinal direction of profile body 1 and the plastic composite 2 in which elongate fibres 3 are embedded. A layer in the form of fibre cloth 35, carrying the ink pattern, is arranged around core 34 of profile element 1. Also shown is that the sides of fibre cloth 35a and 35b folded around core 34 of the profile body overlap each other on the underside of the profile element. It is otherwise also possible for the sides of fibre cloth 35a and 35b not to overlap each other. A second fibre cloth, which for instance overlaps on both sides, is then preferably arranged over an opening between the two sides 35a and 35b. Such a second fibre cloth can be arranged simultaneously with the first fibre cloth in the pulltrusion mould.

Figure 19 shows that it is favourable to apply a protective lacquer layer to the decorated surface 10 of profile body 1 of railing element 9 by means of a spraying process, represented schematically by means of a lacquer gun 11. The protective lacquer layer serves for instance as UV filter for the purpose of protecting the ink pattern from UV light. In order to improve the adhesion of such a lacquer layer to decorated surface 10 it is advantageous to roughen the decorated surface 10. Because fibre cloth 35 becomes saturated with plastic composite 2 during the manufacture of profile body 1 as shown in figure 17, a layer of plastic composite forms on fibre cloth 35. During roughening of the decorated surface 10 this layer of plastic composite is roughened so that the fibre cloth and the decoration in the form of ink pattern 7 are not damaged as a result of the roughening.

The figures show the railing element according to the invention on a cruise ship. A railing element according to the invention could for instance also be applied on a private yacht and on a bridge over water.

## Claims

1. Railing element,
comprising
- a profile body (1) substantially of a plastic composite; and
- a decoration at the surface (10) of the profile body; **characterized in that**
- the decoration is an ink pattern.

2. Railing element as claimed in claim 1, wherein the plastic composite is a fibre-reinforced plastic composite.

3. Railing element as claimed in claim 1 or 2, wherein the surface of the profile body comprises the ink pattern.

4. Railing element as claimed in claim 1 or 2, wherein a layer arranged in the profile body comprises the ink pattern.

5. Railing element as claimed in claim 1 or 2, wherein a layer arranged on the surface of the profile body comprises the ink pattern, wherein the layer comprising the ink pattern is preferably a lacquer layer.

6. Railing element as claimed in claim 5, wherein the layer comprising the ink pattern is a lacquer layer.

7. Railing element as claimed in any of the foregoing claims, wherein a protective lacquer layer is applied over the decoration.

8. Railing element as claimed in any of the foregoing claims, wherein the profile body is hollow.

9. Railing element as claimed in claim 8, also comprising lighting elements (17) at the surface of the railing element which are operatively connected to lighting power supply means (19) in the cavity (18) of the profile body.

10. Railing element as claimed in claim 8 or 9, also comprising sprinkler elements (20) at the surface of the railing element which are operatively connected to a sprinkler feed means (21) in the cavity of the profile body.

11. Railing element as claimed in any of the foregoing claims, also comprising a body (25) which has bending stiffness and which extends along the profile body.

12. Method for manufacturing a railing element, comprising the following steps of:
- forming a profile body (1) from a plastic composite; and
- arranging a decoration at a surface of the profile body; **characterized in that**
- the arranging of a decoration is applying ink in a pattern.

13. Method as claimed in claim 12, wherein the plastic composite is a fibre-reinforced plastic composite.

14. Method as claimed in claim 12 or 13, also comprising the step of applying a protective lacquer layer to the decorated surface.

15. Method as claimed in any of the claims 12-14, wherein applying ink in a pattern to a surface of the profile body comprises the following steps of:
- providing a carrier (6) with the ink pattern (7) thereon;
- placing the carrier with the ink pattern close to a surface to be decorated; and
- transferring the ink pattern from the carrier to the surface to be decorated by means of sublimating the ink under the influence of heat.

16. Method as claimed in claim 15, wherein the surface of the profile body comprises the surface to be decorated.

17. Method as claimed in claim 15, also comprising the step of applying to the surface of the profile body a decoration-carrying lacquer layer as the surface to be decorated.

18. Method as claimed in any of the claims 15-17, also comprising the step of roughening the surface to be decorated prior to the step of transferring the ink pattern from the carrier to the surface to be decorated.

19. Method as claimed in any of the claims 12-18, wherein the step of forming a profile body from a plastic composite comprises the step of extruding a profile body (1, 24) from the plastic composite.

20. Method as claimed in claim 19, also comprising the steps of:
- providing a body (25) having bending stiffness; and
- arranging the profile body (24) on the body having bending stiffness.

21. Method as claimed in any of the claims 12-14, wherein the step of forming a profile body from a plastic composite comprises the step of arranging a decoration at a surface of the profile body.

22. Method as claimed in claim 21, wherein
- the step of forming a profile body from a plastic composite comprises the step of forming a core of the profile body; and
- the step of arranging a decoration at a surface of the profile body comprises the step of arranging a layer of material carrying the decoration around the core of the profile body.

23. Method as claimed in claim 22, wherein
- the step of forming a core of the profile body comprises of forming a bundle of elongate fibres (3) saturated in the plastic composite (2) as the core of the profile body in a pulltrusion process; and
- the step of arranging a layer of material carrying the decoration around the core of the profile body comprises of arranging, as the layer of material carrying the decoration, a fibre cloth carrying the decoration around the bundle of elongate fibres saturated in the plastic composite in the pulltrusion process.

24. Cruise ship comprising a railing element,
wherein the railing element comprises:
- a profile body (1) substantially of a plastic composite; and
- a decoration at the surface (10) of the profile body; **characterized in that**
- the decoration is an ink pattern.

## Patentansprüche

1. Geländerelement, umfassend
- einen Profilkörper (1), welcher im Wesentlichen aus einem Kunststoffverbund besteht; und
- eine Dekoration an der Oberfläche (10) des Profilkörpers; **dadurch gekennzeichnet, dass**
- die Dekoration ein Tintenmuster ist.

2. Geländerelement gemäß Anspruch 1, wobei der Kunststoffverbund ein faserverstärkter Kunststoffverbund ist.

3. Geländerelement gemäß Anspruch 1 oder 2, wobei die Oberfläche des Profilkörpers das Tintenmuster umfasst.

4. Geländerelement gemäß Anspruch 1 oder 2, wobei eine Schicht, welche in dem Profilkörper angeordnet ist, das Tintenmuster umfasst.

5. Geländerelement gemäß Anspruch 1 oder 2, wobei eine Schicht, welche auf der Oberfläche des Profilkörpers angeordnet ist, das Tintenmuster umfasst, wobei die Schicht, welche das Tintenmuster umfasst, vorzugsweise eine Lackschicht ist.

6. Geländerelement gemäß Anspruch 5, wobei die Schicht, welche das Tintenmuster umfasst, eine Lackschicht ist.

7. Geländerelement gemäß irgendeinem der vorhergehenden Ansprüche, wobei eine schützende Lackschicht über der Dekoration aufgebracht ist.

8. Geländerelement gemäß irgendeinem der vorhergehenden Ansprüche, wobei der Profilkörper hohl ist.

9. Geländerelement gemäß Anspruch 8, weiterhin Beleuchtungselemente (17) an der Oberfläche des Geländerelements umfassend, welche operativ mit einer Beleuchtungsenergiezuführeinrichtung (19) in dem Hohlraum (18) des Profilkörpers verbunden sind.

10. Geländerelement gemäß Anspruch 8 oder 9, weiterhin Sprinklerelemente (20) an der Oberfläche des Geländerelements umfassend, welche operativ mit einer Springklerzuführeinrichtung (21) in dem Hohlraum des Profilkörpers verbunden sind.

11. Geländerelement gemäß irgendeinem der vorhergehenden Ansprüche, weiterhin einen Körper (25) umfassend, welcher eine Biegesteifigkeit aufweist, und welcher sich entlang des Profilkörpers erstreckt.

12. Verfahren zum Herstellen eines Geländerelements, welches die folgenden Schritte umfasst:
- Bilden eines Profilkörpers (1) aus einem Kunststoffverbund; und
- Anordnen einer Dekoration an einer Oberfläche des Profilkörpers; **dadurch gekennzeichnet, dass**
- das Anordnen einer Dekoration ein Aufbringen von Tinte in einem Muster ist.

13. Verfahren gemäß Anspruch 12, wobei der Kunststoffverbund ein faserverstärkter Kunststoffverbund ist.

14. Verfahren gemäß Anspruch 12 oder 13, weiterhin den Schritt des Aufbringens einer schützenden Lackschicht auf die dekorierte Oberfläche umfassend.

15. Verfahren gemäß irgendeinem der Ansprüche 12 bis 14, wobei ein Aufbringen von Tinte in einem Muster auf eine Oberfläche des Profilkörpers die folgenden Schritte umfasst:
- Vorsehen eines Trägers (6) mit dem Tintenmuster (7) darauf;
- Platzieren des Trägers mit dem Tintenmuster dicht an eine Oberfläche, die zu dekorieren ist; und
- Transferieren des Tintenmusters von dem Träger auf die Oberfläche, die zu dekorieren ist, mittels Sublimieren der Tinte unter dem Einfluss von Wärme.

16. Verfahren gemäß Anspruch 15, wobei die Oberfläche des Profilkörpers die Oberfläche umfasst, die zu dekorieren ist.

17. Verfahren gemäß Anspruch 15, weiterhin den Schritt des Aufbringens auf die Oberfläche des Profilkörpers einer dekorationstragenden Lackschicht als die Oberfläche, die zu dekorieren ist, umfassend.

18. Verfahren gemäß irgendeinem der Ansprüche 15 bis 17, weiterhin den Schritt umfassend des Aufrauens der Oberfläche, die zu dekorieren ist, vor dem Schritt des Transferierens des Tintenmusters von dem Träger auf die Oberfläche, die zu dekorieren ist.

19. Verfahren gemäß irgendeinem der Ansprüche 12 bis 18, wobei der Schritt des Bildens eines Profilkörpers aus einem Kunststoffverbund den Schritt umfasst des Extrudierens eines Profilkörpers (1, 24) aus dem Kunststoffverbund.

20. Verfahren gemäß Anspruch 19, weiterhin die Schritte umfassend:
- Vorsehen eines Körpers (25), welcher eine Biegesteifigkeit aufweist; und
- Anordnen des Profilkörpers (24) auf dem Körper, welcher eine Biegesteifigkeit aufweist.

21. Verfahren gemäß irgendeinem der Ansprüche 12 bis 14, wobei der Schritt des Bildens eines Profilkörpers aus einem Kunststoffverbund den Schritt umfasst des Anordnens einer Dekoration an einer Oberfläche des Profilkörpers.

22. Verfahren gemäß Anspruch 21, wobei
- der Schritt des Bildens eines Profilkörpers aus einem Kunststoffverbund den Schritt umfasst des Bildens eines Kerns des Profilkörpers; und
- der Schritt des Anordnens einer Dekoration an einer Oberfläche des Profilkörpers den Schritt umfasst des Anordnens einer Schicht von Material, welches die Dekoration trägt, um den Kern des Profilkörpers herum.

23. Verfahren gemäß Anspruch 22, wobei
- der Schritt des Bildens eines Kerns des Profilkörpers ein Bilden eines Bündels von länglichen Fasern (3) umfasst, welche in dem Kunststoffverbund (2) gesättigt sind, als den Kern des Profilkörpers in einem Pultrusionsprozess; und
- der Schritt des Anordnens einer Schicht von Material, welches die Dekoration trägt, um den Kern des Profilkörpers herum ein Anordnen eines Fasergewebes umfasst, welches die Dekoration trägt, als die Schicht von Material, welches die Dekoration trägt, um das Bündel von länglichen Faser herum, welche in dem Kunststoffverbund gesättigt sind, in dem Pultrusionsprozess.

24. Kreuzfahrtschiff, welches ein Geländerelement umfasst, wobei das Geländerelement umfasst:
- einen Profilkörper (1), welcher im Wesentlichen aus einem Kunststoffverbund besteht; und
- eine Dekoration an der Oberfläche (10) des Profilkörpers; **dadurch gekennzeichnet, dass**
- die Dekoration ein Tintenmuster ist.

## Revendications

1. Elément de rambarde comprenant,
- un corps profilé (1) sensiblement en une matière plastique composite ; et
- une décoration au niveau de la surface (10) du corps profilé ; **caractérisé en ce que**
- la décoration est un motif d'encre.

2. Elément de rambarde selon la revendication 1, dans lequel la matière plastique composite est une matière plastique composite renforcée par fibres.

3. Elément de rambarde selon la revendication 1 ou 2, dans lequel la surface du corps profilé comprend le motif d'encre.

4. Elément de rambarde selon la revendication 1 ou 2, dans lequel une couche agencée dans le corps profilé comprend le motif d'encre.

5. Elément de rambarde selon la revendication 1 ou 2, dans lequel une couche agencée sur la surface du corps profilé comprend le motif d'encre, dans lequel la couche comprenant le motif d'encre est de préférence une couche de laque.

6. Elément de rambarde selon la revendication 5, dans lequel la couche comprenant le motif d'encre est une couche de laque.

7. Elément de rambarde selon l'une quelconque des revendications précédentes, dans lequel une couche de laque de protection est appliquée sur la décoration.

8. Elément de rambarde selon l'une quelconque des revendications précédentes, dans lequel le corps profilé est creux.

9. Elément de rambarde selon la revendication 8, comprenant en outre des éléments d'éclairage (17) au niveau de la surface de l'élément de rambarde qui sont reliés fonctionnellement à des moyens d'alimentation d'éclairage (19) dans la cavité (18) du corps profilé.

10. Elément de rambarde selon la revendication 8 ou 9, comprenant également des éléments d'extincteur automatique (20) au niveau de la surface de l'élément de rambarde qui sont reliés fonctionnellement à des moyens d'alimentation d'extincteur automatique (21) dans la cavité du corps profilé.

11. Elément de rambarde selon l'une quelconque des revendications précédentes, comprenant également un corps (25) qui a une résistance à la flexion et qui s'étend le long du corps profilé.

12. Procédé de fabrication d'un élément de rambarde, comprenant les étapes suivantes consistant à :
- former un corps profilé (1) à partir d'une matière plastique composite ; et
- agencer une décoration au niveau d'une surface du corps profilé ;
**caractérisé en ce que**
- l'agencement d'une décoration consiste à appliquer de l'encre en un motif.

13. Procédé selon la revendication 12, dans lequel la matière plastique composite est une matière plastique composite renforcée par fibres.

14. Procédé selon la revendication 12 ou 13, comprenant également l'étape d'application d'une couche de laque de protection à la surface décorée.

15. Procédé selon l'une quelconque des revendications 12 à 14, dans lequel l'application d'encre en un motif à une surface du corps profilé comprend les étapes suivantes consistant à :
- fournir un support (6) avec le motif d'encre (7) sur celui-ci ;
- placer le support avec le motif d'encre à proximité d'une surface à décorer ; et
- transférer le motif d'encre du support à la surface à décorer par la sublimation de l'encre sous l'influence de chaleur.

16. Procédé selon la revendication 15, dans lequel la surface du corps profilé comprend la surface à décorer.

17. Procédé selon la revendication 15, comprenant également l'étape d'application à la surface du corps profilé d'une couche de laque de support de décoration en tant que surface à décorer.

18. Procédé selon l'une quelconque des revendications 15 à 17, comprenant également l'étape de rugosification de la surface à décorer avant l'étape de transfert du motif d'encre du support à la surface à décorer.

19. Procédé selon l'une quelconque des revendications 12 à 18, dans lequel l'étape de formation d'un corps profilé à partir d'une matière plastique composite comprend l'étape d'extrusion d'un corps profilé (1, 24) à partir de la matière plastique composite.

20. Procédé selon la revendication 19, comprenant également les étapes consistant à :
- fournir un corps (25) ayant une résistance à la flexion ; et
- agencer le corps profilé (24) sur le corps ayant la résistance à la flexion.

21. Procédé selon l'une quelconque des revendications 12 à 14, dans lequel l'étape de formation d'un corps profilé à partir d'une matière plastique composite comprend l'étape d'agencement d'une décoration au niveau d'une surface du corps profilé.

22. Procédé selon la revendication 21, dans lequel
- l'étape de formation d'un corps profilé à partir d'une matière plastique composite comprend l'étape de formation d'un noyau du corps profilé ; et
- l'étape d'agencement d'une décoration au niveau d'une surface du corps profilé comprend l'étape d'agencement d'une couche de matériau supportant la décoration autour du noyau du corps profilé.

23. Procédé selon la revendication 22, dans lequel
- l'étape de formation d'un noyau du corps profilé consiste à former un faisceau de fibres allongées (3) saturées dans la matière plastique composite (2) en tant que noyau du corps profilé dans un processus de pultrusion ; et
- l'étape d'agencement d'une couche de matériau supportant la décoration autour du noyau du corps profilé consiste à agencer, en tant que couche de matériau supportant la décoration, un tissu en fibres supportant la décoration autour du faisceau de fibres allongées saturées dans la matière plastique composite dans le processus de pultrusion.

24. Navire de croisière comprenant un élément de rambarde, dans lequel l'élément de rambarde comprend :
- un corps profilé (1) sensiblement en une matière plastique composite ; et
- une décoration au niveau de la surface (10) du corps profilé ; **caractérisé en ce que**
- la décoration est un motif d'encre.
